# EUROPÄISCHE PATENTSCHRIFT

(11) **EP 1 248 928 B1**
(45) Veröffentlichungstag und Bekanntmachung des Hinweises auf die Patenterteilung: **28.07.2004**
(21) Anmeldenummer: 01909581.9
(22) Anmeldetag: 06.01.2001
(51) Int. Cl.: F16P 3/12

(54) **SCHUTZVORRICHTUNG GEGEN UNERWÜNSCHTE INBETRIEBNAHME EINER MASCHINENANLAGE**
PROTECTION DEVICE AGAINST THE UNDESIRABLE INITIATION OF A MACHINERY
DISPOSITIF DE SECURITE EMPECHANT LA MISE EN MARCHE NON VOULUE D'UNE MACHINE

(30) Priorität: 17.01.2000 DE 10001735
(43) Veröffentlichungstag der Anmeldung: 16.10.2002
(73) Patentinhaber: PILZ GmbH & CO., 73760 Ostfildern (DE)
(72) Erfinder: CLEMENT, Klaus, 73333 Gingen (DE); FÖRSTER, Harald, 73079 Süssen (DE)
(74) Vertreter: Duhme, Torsten
(86) Internationale Anmeldenummer: PCT/EP2001/000093
(87) Internationale Veröffentlichungsnummer: WO 2001/053742

(56) Entgegenhaltungen:
- EP-A- 0 865 055
- DE-A- 4 409 541
- US-A- 5 412 528

## Beschreibung

Die vorliegende Erfindung betrifft eine Schutzvorrichtung gegen eine unerwünschte Inbetriebnahme einer Maschinenanlage. Eine solche Schutzvorrichtung dient insbesondere zur Verhinderung eines unkontrollierten oder unbeabsichtigten Wiederanlaufs der Maschinenanlage nach einer zeitlich begrenzten Unterbrechung oder Stillegung des Betriebs.

Es ist bekannt, daß von Maschinenanlagen, insbesondere von solchen mit bewegten Achsen, Gefahren für Menschen und andere Maschinenteile ausgehen. Zur Vermeidung von Unfällen existieren daher zahlreiche Sicherheitsvorschriften für den Betrieb solcher Anlagen. Trotzdem kommt es immer wieder zu Unfällen, was zum Teil auf eine Umgehung oder Vernachlässigung der Sicherheitsvorschriften aus Gründen der Bequemlichkeit oder Unachtsamkeit zurückzuführen ist. Darüber hinaus können sich Unfälle auch aus einer Verkettung ungünstiger Umstände ergeben.

Besondere Gefahrensituationen sind vor allem bei großräumigen, komplexen Maschinenanlagen Einrichte-, Wartungs- sowie Instandsetzungsarbeiten, da auszuführende Tätigkeiten in diesen Fällen häufig in einem unmittelbaren Gefahrenbereich der Maschinenanlage vorgenommen werden müssen. Es ist bei der Durchführung dieser Tätigkeiten daher im Regelfall erforderlich, die Maschinenanlage insgesamt oder zumindest denjenigen Teil, von dem die unmittelbare Gefahr ausgeht, abzuschalten. Im zuletzt genannten Fall ist eine Gefährdung jedoch nicht vollständig ausgeschlossen, da die Maschinenanlage hierbei insgesamt noch aktiv ist. Beispielsweise kann in diesem Fall eine an sich abgeschaltete Achse aufgrund eines Maschinenfehlers, bspw. eines Kurzschlusses, oder aufgrund einer Fehlbedienung unerwartet wieder anlaufen.

Zur Vermeidung derartiger Risiken ist es daher wünschenswert, die Maschinenanlage bei der Durchführung der zuvor genannten Arbeiten möglichst vollständig und gleichzeitig sicher abzuschalten. Dies ist bei vielen Maschinenanlagen über einen sogenannten Hauptschalter möglich, der jedoch bei großräumigen, komplexen Anlagen aus konstruktiven Gründen häufig weit von der eigentlichen Gefahrenstelle entfernt angeordnet ist. Zum Ausund Wiedereinschalten der Maschine sind daher unter Umständen weite Wege erforderlich, was dazu verleiten kann, auf eine vollständige Abschaltung der Maschinenanlage zu verzichten.

Darüber hinaus besteht aufgrund der räumlichen Trennung zwischen dem Hauptschalter und dem Gefahrenbereich der Maschinenanlage die Gefahr, daß die Maschinenanlage von einer Person wieder eingeschaltet werden kann, während sich eine andere Person noch in dem Gefahrenbereich der Maschinenanlage aufhält.

Schließlich bestehen bei einer Maschinenanlage auch dann Gefahren, wenn sämtliche beweglichen Achsen fehlersicher stillgelegt sind. Beispielsweise können bei Wartungsarbeiten an stillgelegten Maschinen Unfälle aufgrund von nicht-spannungsfreien Stromversorgungsleitungen auftreten.

In der nicht vorveröffentlichten PCT/US 99/08322 (eingereicht am 15.04.1999 beim USPTO unter Beteiligung der vorliegenden Anmelderin als Mitanmelderin) ist eine Schutzvorrichtung gegen eine unerwünschte Inbetriebnahme einer Maschinenanlage beschrieben, die unter Beteiligung der Anmelderin der vorliegenden Erfindung in einem Gemeinschaftsprojekt entwickelt wurde, um die zuvor genannten Gefahren und Probleme zu vermeiden. Die vorliegende Erfindung ist eine Weiterentwicklung dieser früheren Schutzvorrichtung, die eine Reihe von eigenständigen Detailverbesserungen innerhalb des Gesamtkonzeptes beinhaltet.

Es ist daher Aufgabe der vorliegenden Erfindung, eine verbesserte Schutzvorrichtung gegen die unerwünschte Inbetriebnahme einer Maschinenanlage anzugeben, die einen zuverlässigen und sicheren Schutz bei Einricht-, Wartungs- sowie Instandsetzungsarbeiten im Gefahrenbereich der Maschinenanlage gewährleistet.

Diese Aufgabe wird durch eine Schutzvorrichtung der eingangs genannten Art gelöst, die folgende Merkmale aufweist:
- zumindest einen zentralen Leistungsschalter, der eingangsseitig seriell in einem Stromversorgungspfad der Maschinenanlage angeordnet ist,
- einen zentralen Steuerteil, der ein im wesentlichen staubdicht geschlossenes Gehäuse mit einer definierten Anzahl von Eingängen zum Anschließen von dezentralen Bedienelementen aufweist, wobei der zentrale Steuerteil den zumindest einen zentralen Leistungsschalter in Abhängigkeit von den angeschlossenen Bedienelementen ansteuert, und
- zumindest ein dezentrales Bedienelement, das räumlich in einem Gefahrenbereich der Maschinenanlage angeordnet ist und das über eine Kabelverbindung an einen der Eingänge des zentralen Steuerteils angeschlossen ist,
- wobei das dezentrale Bedienelement in Abhängigkeit von einer Schutzanforderung ein stationäres Schutzanforderungssignal erzeugt, und
- wobei der Steuerteil den Leistungsschalter öffnet, wenn das stationäre Schutzanforderungssignal von zumindest einem Bedienelement vorliegt.

Die Kombination dieser Merkmale führt zu einer Schutzvorrichtung, die von jedem Gefahrenpunkt der Maschinenanlage aus dezentral zu aktivieren ist, so daß auch bei einer großräumigen, komplexen Maschinenanlage weite Wegstrecken vermieden werden. Hierdurch wird die Akzeptanz, die Schutzvorrichtung bei Arbeiten im Gefahrenbereich der Maschinenanlage in Betrieb zu nehmen, beträchtlich erhöht. Des weiteren ist durch die dezentrale Anordnung der Bedienelemente in Verbindung mit deren stationärem Schutzanforderungssignal eine unerwünschte Inbetriebnahme von einem anderen Ort aus als dem Gefahrenbereich, in dem gearbeitet wird, ausgeschlossen. Unfälle aufgrund von Mißverständnissen zwischen mehreren Personen sind daher ebenfalls weitgehend ausgeschlossen. Darüber hinaus ist aufgrund der Tatsache, daß der zentrale Leistungsschalter den Stromversorgungspfad der Maschinenanlage eingangsseitig unterbricht, die Maschinenanlage insgesamt stromlos geschaltet, so daß auch bei Auftreten von fehlerhaften Kurzschlüssen oder dgl. Gefahren für Bedienungsund Wartungspersonal beträchtlich reduziert sind.

Ferner ist die vorliegende Schutzvorrichtung aufgrund der Tatsache, daß der Steuerteil ein im wesentlichen staubdicht geschlossenes Gehäuse aufweist, sehr gut gegenüber Funktionsausfällen oder Fehlern geschützt. Derartige Funktionsausfälle könnten ansonsten insbesondere aufgrund von Verschmutzungen im Einsatzbetrieb der Maschinenanlage oder durch ein Eindringen von Fremdkörpern in den Steuerteil auftreten. Dabei würde sowohl der Betrieb als auch die Sicherheit der Maschinenanlage beeinträchtigt. Als staubdichtes Gehäuse wird dabei im Rahmen der vorliegenden Erfindung insbesondere ein Gehäuse verstanden, das zumindest die Klasse IP 54 gemäß den Normen IEC 529/EN 60 529 besitzt.

Die genannte Aufgabe ist daher vollständig gelöst.

In einer Ausgestaltung der Erfindung versorgt der Stromversorgungspfad zumindest zwei eigenständige Verbraucher der Maschinenanlage mit Strom.

Eigenständige Verbraucher in diesem Sinne sind insbesondere voneinander getrennte Antriebe der Maschinenanlage, wie sie bspw. bei mehrachsig bewegbaren Maschinenanlagen verwendet werden. Darüber hinaus zählen hierzu jedoch auch sämtliche anderen Baugruppen, die über den Stromversorgungspfad der Maschinenanlage versorgt werden, bspw. eine Steuereinheit oder eine stromführende Schalteinheit. Von solchen Baugruppen kann insbesondere bei Wartungsarbeiten auch bei ruhenden Antrieben eine Gefahr durch Stromschlag ausgehen. Die Maßnahme besitzt den Vorteil, daß mehrere Gefahrenquellen, bevorzugt sogar sämtliche Gefahrenquellen der Maschinenanlage, mit einem zentralen Handgriff in einen sicheren Zustand gebracht werden. Hierdurch wird einerseits der Aufwand reduziert, und andererseits wird eine besonders hohe Sicherheit gegenüber Fehlbedienungen erreicht.

In einer weiteren Ausgestaltung der zuvor genannten Maßnahme ist einer der zumindest zwei eigenständigen Verbraucher eine Steuereinheit der Maschinenanlage.

Diese Maßnahme erhöht nochmals die Sicherheit, da in diesem Fall nicht nur die Energieversorgung für die beweglichen Antriebe der Maschinenanlage, sondern auch deren Ansteuersignale abgeschaltet werden. Hierdurch wird die Gefahr eines unerwünschten Wiederanlaufs eines Antriebs nochmals verringert.

In einer weiteren Ausgestaltung der Erfindung ist der Leistungsschalter zusätzlich zu einem eingangsseitigen Hauptschalter in dem Stromversorgungspfad der Maschinenanlage angeordnet.

Eingangsseitige Hauptschalter sind bei vielen im Einsatz befindlichen Maschinenanlagen vorhanden. Die Anordnung des Leistungsschalters zusätzlich zu diesen Hauptschaltern ermöglicht eine einfache und damit kostengünstige Nachrüstung der erfindungsgemäßen Schutzvorrichtung bei solchen Maschinenanlagen. Darüber hinaus ist eine zusätzliche Redundanz vorhanden, die eine zentrale Abschaltung der Maschinenanlage auch auf einem bereits weithin bekannten und daher üblichen Weg ermöglicht. Daher kann in diesem.Fall auch jemand, der die neue Schutzvorrichtung nicht kennt, die Maschinenanlage wie gewohnt abschalten.

In einer weiteren Ausgestaltung der Erfindung weist die Vorrichtung eine Überwachungseinheit auf, mit der der Stromversorgungspfad am Ausgang des zumindest einen Leistungsschalters fehlersicher auf Spannungsfreiheit überprüfbar ist.

Diese Maßnahme erhöht nochmals die Sicherheit, da auf diese Weise der Erfolg der Abschaltvorgänge fehlersicher überprüft werden kann. Des weiteren kann eine Gefährdung durch elektrischen Strom bei Wartungs- oder Instandsetzungsarbeiten so sicher ausgeschlossen werden.

In einer weiteren Ausgestaltung der zuvor genannten Maßnahme weist das zumindest eine dezentrale Bedienelement eine Kontrollanzeige auf, die in Abhängigkeit von einem Quittungssignal der sicheren Überwachungseinheit aktivierbar ist.

Die Maßnahme besitzt den Vorteil, daß eine Person, die Arbeiten im Gefahrenbereich der Maschinenanlage durchführen will, eine eindeutige Rückkopplung über den eingenommenen, sicheren Zustand der Maschinenanlage erhält. Hierdurch ist eine zuverlässige Einschätzung der jeweiligen Gefahrensituation möglich, was wiederum die Sicherheit gegenüber Fehlbedienungen erhöht. Die Kontrollanzeige kann dabei grundsätzlich auf beliebige Art realisiert sein und sowohl optische als auch akustische und/oder haptische Signale umfassen. Bevorzugt wird als Kontrollanzeige eine deutlich sichtbare Kontrolleuchte verwendet, die im sicheren Zustand der Maschinenanlage leuchtet.

In einer weiteren Ausgestaltung der Erfindung beinhaltet der zentrale Steuerteil eine Verteilereinheit, die eingangsseitig eine Vielzahl von Eingängen zum Anschließen der dezentralen Bedienelemente aufweist und die ausgangsseitig ein kombiniertes Schutzanforderungssignal aller angeschlossenen Bedienelemente erzeugt.

Die Verwendung einer derartigen Verteilereinheit erhöht die Modularität der Schutzvorrichtung beträchtlich, was eine besonders einfache und kostengünstige Anpassung an unterschiedliche Maschinenanlagen ermöglicht. Bevorzugt ist die Verteilereinheit dabei von dem eigentlichen Steuerelement des Steuerteils abgesetzt, was eine sehr weiträumige Anordnung der Schutzvorrichtung ermöglicht. Je nach den Gegebenheiten der betroffenen Maschinenanlage kann das Steuerelement dann sogar in einem nicht mehr vollständig staubdicht geschlossenen Gehäuse untergebracht sein, wenn dieses Gehäuse weit genug von Verschmutzungsquellen entfernt liegt. Die näher an den Bedienelementen liegende Verteilereinheit weist dann jedoch das eingangs genannte staubdichte Gehäuse auf.

In einer weiteren Ausgestaltung der Erfindung weisen die Eingänge zum Anschließen der dezentralen Bedienelemente mehrteilige Kabeldurchführungen auf, deren Teile die Kabelverbindung im wesentlichen staubdicht umgreifen.

Diese Maßnahme besitzt den wesentlichen Vorteil, daß man aufgrund der mehrteiligen und daher trennbaren Kabeldurchführungen die Kabelverbindung mit Leitungen realisieren kann, die bereits mit geeigneten Steckern vorkonfektioniert sind. Hierdurch wird eine sehr einfache und gleichzeitig sichere Installation und Erweiterung der Schutzvorrichtung ermöglicht, was die Akzeptanz bei Anwendern beträchtlich erhöht. Des weiteren kann die erfindungsgemäße Schutzvorrichtung aufgrund dieser Maßnahme sehr gut als modulare, vom Anwender selbst installierbare Anlage geliefert werden. Im Vergleich mit Steckern oder Buchsen, die von außen zugänglich sind, sind derartige Kabeldurchführungen bei gleicher Sicherheit sehr kostengünstig.

In einer weiteren Ausgestaltung der Erfindung ist der Steuerteil in einem eigenen staubdicht geschlossenen Gehäuse angeordnet.

Diese Maßnahme besitzt den Vorteil, daß der Steuerteil sehr gut als modulare Baugruppe verwendet werden kann. Dadurch kann die Schutzvorrichtung besonderes leicht auch bei älteren, bestehenden Maschinenanlagen nachgerüstet werden. Die Nachrüstung ist dann mit Ausnahme des Einbaus des zentralen Leistungsschalters ohne Eingriffe in und Anpassungen an die bestehende Maschinenanlage möglich.

In einer weiteren Ausgestaltung der Erfindung ist auch der Leistungsschalter in einem eigenen, staubdicht geschlossenen Gehäuse angeordnet, das mehrteilige, staubdichte Kabeldurchführungen für Kabelverbindungen aufweist.

Auch diese Maßnahme trägt zur einfachen Installation der Schutzvorrichtung bei und sie ermöglicht zudem eine räumlich getrennte Anordnung des zentralen Leistungsschalters und des zentralen Steuerteils. Die erfindungsgemäße Schutzvorrichtung kann daher sehr einfach auch in bestehenden, weiträumig verteilten Maschinenanlagen eingesetzt werden.

In einer weiteren Ausgestaltung der Erfindung, die jedoch auch für sich genommen eine bevorzugte und vorteilhafte Weiterentwicklung der früher entwickelten Schutzvorrichtung ist, weist der zumindest eine Leistungsschalter einen mechanisch zwangsgeführten Hilfskontakt auf, der in einen Rückführkreis eingebunden ist.

Leistungsschalter, insbesondere Schütze, die zusätzlich zu ihren Arbeitskontakten mechanisch zwangsgeführte Hilfskontakte aufweisen, sind im Stand der Technik an sich bekannt. Derartige Leistungsschalter kamen allerdings bei der früher entwickelten Schutzvorrichtung nicht zum Einsatz. Statt dessen wurde die Schaltstellung der Arbeitskontakte des zumindest einen Leistungsschalters durch aufwendige Schaltungsmaßnahmen überprüft. Die genannte Maßnahme besitzt demgegenüber den Vorteil, daß bei gleichbleibender Sicherheit der Aufwand beträchtlich reduziert wird. Gegenüber einer Variante, die auf eine Überprüfung der Schaltstellung der Arbeitskontakte gänzlich verzichtet, bietet die Maßnahme eine beträchtlich erhöhte Sicherheit.

In einer weiteren Ausgestaltung der Erfindung, die ebenfalls auch für sich genommen eine bevorzugte und vorteilhafte Weiterentwicklung darstellt, weist die Vorrichtung einen AC/AC-Wandler auf, der eingangsseitig an den Stromversorgungspfad der Maschinenanlage angeschlossen ist und der ausgangsseitig eine Betriebsspannung für die Vorrichtung bereitstellt.

Im Vergleich zu einem einfachen Trafo besitzt ein AC/AC-Wandler den Vorteil, daß er unabhängig von der Größe seiner Eingangsspannung stets eine definierte Ausgangsspannung bereitstellt. Die Verwendung eines solchen Wandlers im Zusammenhang mit der vorliegenden Erfindung besitzt daher den Vorteil, daß die Schutzvorrichtung ohne Anpassungsmaßnahmen in Ländern mit unterschiedlichen Netzspannungen und in unterschiedlichen Betriebsumgebungen verwendet werden kann. Auch Schwankungen der eingangsseitigen Netzspannung werden auf diese Weise ausgeglichen, so daß eine fehlersichere Funktion der Schutzvorrichtung auch in diesen Fällen gewährleistet ist. Der Einsatz der erfindungsgemäßen Schutzvorrichtung ist daher auch in Ländern mit instabilen Netzspannungen problemlos und sicher möglich.

In einer weiteren Ausgestaltung der Erfindung, die ebenfalls auch für sich genommen eine bevorzugte und vorteilhafte Weiterentwicklung darstellt, weist das Steuerelement einen Feldbusanschluß auf, über den die Schutzanforderungssignale zuführbar sind.

Als Feldbus kommt bevorzugt ein fehlersicheres Feldbussystem, insbesondere der sogenannten Safetybus der Anmelderin der vorliegenden Erfindung, zum Einsatz. Alternativ können jedoch auch andere Bussysteme, bspw. der sogenannte Interbus oder der sogenannte Profibus verwendet werden, sofern entsprechende Sicherheitsmaßnahmen vorhanden sind. Die Maßnahme besitzt den Vorteil, daß gerade bei weiträumig ausgedehnten Maschinenanlagen der Verkabelungsaufwand beträchtlich reduziert werden kann, wodurch insgesamt die Kosten für die Installation der Schutzvorrichtung sinken.

Ausführungsbeispiele der Erfindung sind in der Zeichnung dargestellt und werden in der nachfolgenden Beschreibung näher erläutert. Es zeigen:
- Fig. 1: eine schematische Darstellung eines ersten Ausführungsbeispiels einer erfindungsgemäßen Schutzvorrichtung,
- Fig. 2: eine Leistungseinheit mit zentralen Leistungsschaltern, die Bestandteil der erfindungsgemäßen Schutzvorrichtung aus Fig. 1 ist,
- Fig. 3: ein zentrales Steuerelement der Schutzvorrichtung aus Fig. 1,
- Fig. 4: eine zweiteilige Kabeldurchführung, die in der Schutzvorrichtung gemäß Fig. 1 Verwendung findet und
- Fig. 5: ein zweites Ausführungsbeispiel einer erfindungsgemäßen Schutzvorrichtung.

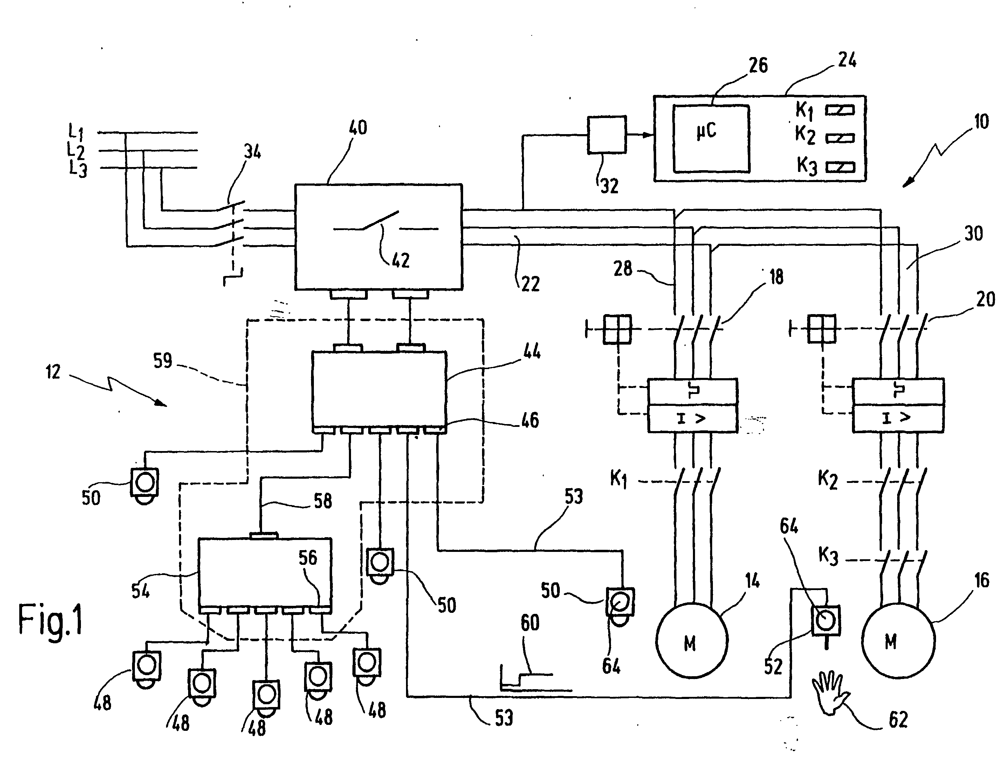

In Fig. 1 ist mit der Bezugsziffer 10 eine Maschinenanlage bezeichnet, in der eine erfindungsgemäße Schutzvorrichtung 12 Verwendung findet.

Die Maschinenanlage 10 besitzt eine Vielzahl von elektromotorischen Antrieben, von denen hier beispielhaft zwei Antriebe 14, 16 dargestellt sind. Die Antriebe 14, 16 ermöglichen voneinander unabhängige Bewegungen der Maschinenanlage 10. Beispielhaft handelt es sich hier um eine Fräsmaschine, bei der der Fräskopf in unterschiedlichen Achsen bewegt werden kann.

Jeder der beiden Antriebe 14, 16 ist in an sich bekannter Weise über jeweils einen Motorschutzschalter 18, 20 vor thermischen und Überstrom-Belastungen geschützt. Beide Antriebe 14, 16 sind an denselben, zentralen Stromversorgungspfad 22 der Maschinenanlage 10 angeschlossen und werden hierüber mit Energie versorgt.

Mit der Bezugsziffer 24 ist eine Steuereinheit der Maschinenanlage 10 bezeichnet, die in an sich bekannter Weise einen Mikrocomputer 26 beinhaltet. Ausgangsseitig besitzt die Steuereinheit 24 drei Abschaltschütze K₁, K₂ und K₃, deren Arbeitskontakte seriell in den Stromzuführungen 28, 30 der Antriebe 14, 16 angeordnet sind. Die Steuereinheit 24 kann über die Schütze K₁, K₂ und K₃ die Antriebe 14, 16 individuell abschalten, was an sich ebenfalls bekannt ist. Beispielhaft für verschiedene Ausführungen ist in der Stromzuführung 28 des Antriebes 14 eine einkanalige Abschaltung und in der Stromzuführung 30 des Antriebs 16 eine zweikanalige Abschaltung dargestellt.

Die Steuereinheit 24 ist im vorliegenden Fall eine sichere Steuereinheit, die zur Auswertung von Not-Aus-Signalen, Schutztürkontakten, Lichtschrankensignalen oder ähnlichem dient. In Abhängigkeit von diesen Signalen werden individuell einer oder mehrere der Antriebe 14, 16 stillgelegt. Zusätzlich könnte die Steuereinheit 24 auch das normale Betriebsprogramm der Maschinenanlage 10 beinhalten, in dessen Programmablauf die Antriebe 14, 16 angesteuert werden. Alternativ hierzu werden die Antriebe 14, 16 bei vielen Maschinenanlagen 10 jedoch im normalen Betriebsablauf von einer weiteren, hier nicht dargestellten Steuereinheit gesteuert, so daß die Steuereinheit 24 dann allein zur Ausführung der genannten Sicherheitsfunktionen dient. Die diesbezüglichen unterschiedlichen Ausführungsbeispiele der Maschinenanlage 10 sind an sich ebenfalls bekannt und brauchen hier daher nicht näher erläutert zu werden. Die Steuereinheit 24 ist hier beispielhaft für sämtliche vorhandenen Steuereinheiten, die nicht zu der erfindungsgemäßen Schutzvorrichtung 12 gehören, dargestellt.

Mit der Bezugsziffer 32 ist ein Netzteil bezeichnet, das eingangsseitig an eine Phase des Stromversorgungspfades 22 angeschlossen ist und das ausgangsseitig eine Betriebsspannung für die Steuereinheit 24 bereitstellt.

Mit der Bezugsziffer 34 ist ein Hauptschalter der Maschinenanlage 10 bezeichnet, der hier als Drehschalter dargestellt ist, wie dies in vielen Fällen üblich ist.

Die Schutzvorrichtung 12 beinhaltet hier eine Leistungseinheit 40 mit einem nachfolgend näher erläuterten Leistungsschalter 42, ein zentrales Steuerelement 44 mit einer Vielzahl von Eingängen 46 sowie insgesamt neun dezentrale Bedienelemente 48, 50, 52, deren Ausgangssignale dem zentralen Steuerelement 44 über Kabelverbindungen 53 zugeführt sind. Die Bedienelemente 48 sind dabei über eine Verteilereinheit 54 mit dem zentralen Steuerelement 44 verbunden. Die Verteilereinheit 54 besitzt eingangsseitig eine Vielzahl von Eingängen 56, die den Eingängen 46 des zentralen Steuerelements 44 sowohl funktional als auch hinsichtlich ihres mechanischen Aufbaus entsprechen. Ausgangsseitig erzeugt die Verteilereinheit 54 ein kombiniertes Ausgangssignal, das über eine Kabelverbindung 58 einem Eingang 46 des Steuerelements 44 zugeführt ist.

Das Steuerelement 44 und die Verteilereinheit 54 sind hier getrennt voneinander angeordnet. Sie bilden dabei gemeinsam den im Sinne der vorliegenden Erfindung als Steuerteil 59 bezeichneten Bereich. Dabei ist die Verwendung der Verteilereinheit 54 jedoch optional, da sie in erster Linie der modularen Erweiterbarkeit der Schutzvorrichtung 12 dient. Wenn das Steuerelement 44 selbst ausreichend viele Eingänge 46 aufweist, kann auf die Verwendung der Verteilereinheit 54 verzichtet werden. In diesem Fall umfaßt der Steuerteil der Schutzvorrichtung 12 dann nur das eigentliche Steuerelement 44.

Die Bedienelemente 48, 50, 52 sind jeweils dezentral an solchen Stellen der Maschinenanlage 10 angeordnet, an denen ein Eingriff in einen Gefahrenbereich erfolgen könnte.

Jedes der Bedienelemente 48, 50, 52 erzeugt auf Anforderung durch einen Bediener ein stationäres Anforderungssignal 60, wie dies am Beispiel des Bedienelements 52 im Bereich des Antriebs 16 durch eine Hand 62 dargestellt ist. Das stationäre Anforderungssignal 60 liegt bei ordnungsgemäßem Betrieb der Schutzvorrichtung 12 solange an dem Steuerelement 44 an, bis es von dem auslösenden Bedienelement 52 wieder zurückgekommen wird. Beispielhaft sind die Bedienelemente 48 bis 52 hier in Form von Drehschaltern dargestellt. Alternativ ist jedoch auch jede beliebige andere Ausführung denkbar, mit der dem Steuerelement 44 die Änderung eines stationären Zustandes gemeldet werden kann. Dies kann grundsätzlich auch mit Hilfe von impulsförmigen Anforderungssignalen 60 geschehen, wenn das Steuerelement 44 unterscheiden kann, ob es sich um einen Einschalt- oder Ausschaltimpuls handelt.

Gemäß einem bevorzugten Ausführungsbeispiel der Erfindung besitzt jedes der Bedienelemente 48 bis 52 eine Kontrollanzeige 64, die hier in Form einer sichtbaren Kontrolleuchte realisiert ist. Die Kontrolleuchte 64 signalisiert dem jeweiligen Bediener, ob sich die Maschinenanlage 10 in einem sicheren Zustand befindet oder nicht.

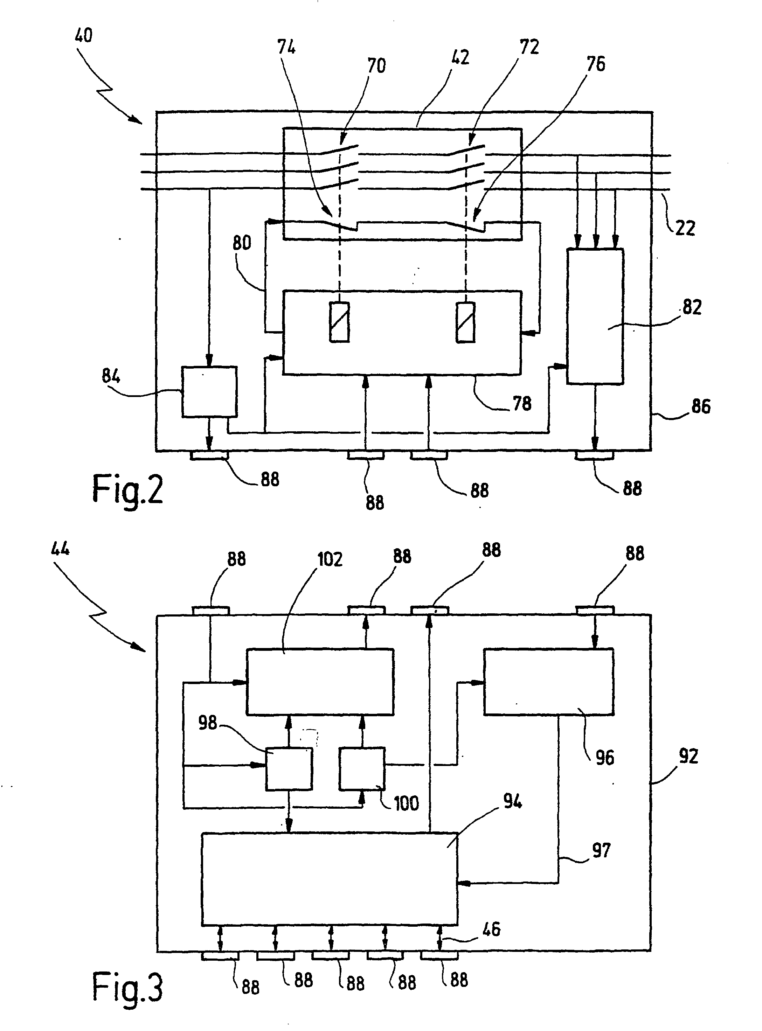

In Fig. 2 ist die Leistungseinheit 40 näher dargestellt. Wie zu erkennen ist, beinhaltet der Leistungsschalter 42 in diesem Ausführungsbeispiel aus Gründen der Redundanz zwei in Serie zueinander angeordnete Gruppen von Arbeitskontakten 70, 72, mit denen jeweils zumindest ein Hilfskontakt 74, 76 mechanisch zwangsgeführt ist. Praktisch ist der Leistungsschalter 42 mit Hilfe von zwei in Serie zueinander angeordneten Schützen mit zwangsgeführten Hilfskontakten 74, 76 realisiert. Wie anhand dieser Verschaltung erkennbar ist, kann der Hauptstromversorgungspfad 22 der Maschinenanlage 10 mit dem Leistungsschalter 42 zweikanalig abgeschaltet werden.

Die Arbeitskontakte 70, 72 sowie die Hilfskontakte 74, 76 des Leistungsschalters 42 werden über Relaisausgänge angesteuert, die Bestandteil eines sicheren Schaltkreises 78 sind. Alternativ hierzu könnte die Ansteuerung jedoch auch über elektronische Ausgänge, beispielsweise Halbleiterausgänge erfolgen.

Der Schaltkreis 78 weist des weiteren einen Rückführkreis 80 auf, über den die Schaltstellung der Hilfskontakte 74, 76 auswertbar ist. Auf diese Weise können die Arbeitskontakte 70, 72 des Leistungsschalters 42 zuverlässig daraufhin überprüft werden, ob sie offen oder geschlossen sind. Der Rückführkreis 80 ist in dieser Darstellung beispielhaft zu verstehen. Alternativ könnte der Rückführkreis auch einem anderen Schaltkreis der Schutzvorrichtung 12, bspw. dem zentralen Steuerelement 44 zugeführt sein. Wesentlich ist allein, daß die Stellung der Arbeitskontakte 70, 72 anhand der Hilfskontakte 74, 76 auf sichere Weise ausgewertet wird, um Fehlfunktionen der Schutzvorrichtung 12 frühzeitig und zuverlässig zu erkennen.

Die Bezugsziffer 82 bezeichnet eine Spannungsüberwachungseinheit, wie sie beispielsweise von der Anmelderin der vorliegenden Erfindung unter der Bezeichnung PU3Z angeboten wird. Es handelt sich hierbei um ein sicheres Schaltgerät, mit dem der Stromversorgungspfad 22 am Ausgang des Leistungsschalters 42 auf Spannungsfreiheit überwacht werden kann, wenn die Arbeitskontakte 70, 72 geöffnet sind.

Mit der Bezugsziffer 84 ist ein AC/AC-Wandler bezeichnet, der eingangsseitig an eine Phase des Stromversorgungspfades 22 angeschlossen ist und der ausgangsseitig eine stabilisierte Betriebsspannung für den Schaltkreis 78, die Überwachungseinheit 82 sowie die nachfolgend beschriebenen, weiteren Komponenten der Schutzvorrichtung 12 bereitstellt.

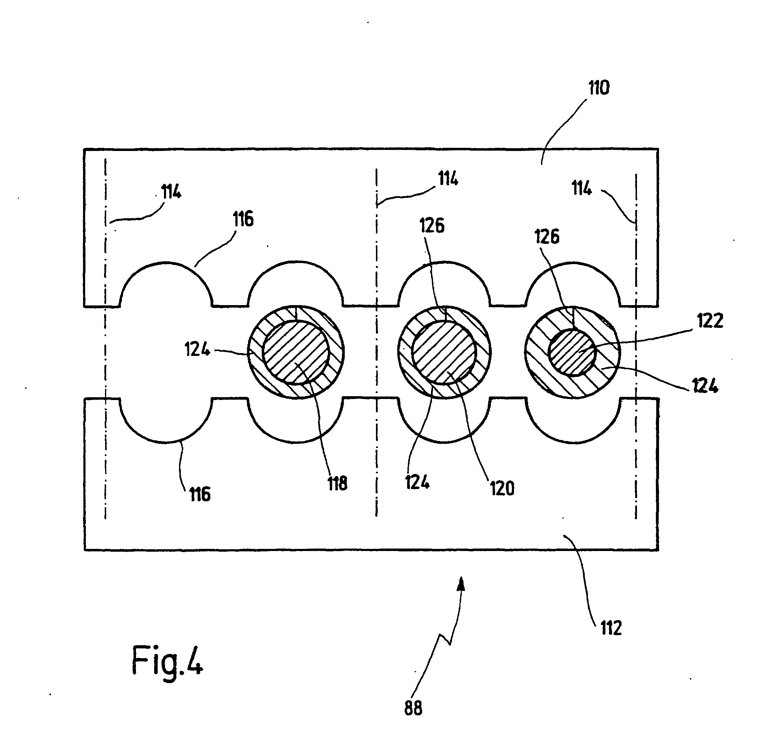

Die Leistungseinheit 40 ist insgesamt in ein eigenes, staubdicht geschlossenes Gehäuse 86 eingebaut, das zum Anschließen der übrigen Komponenten der Schutzvorrichtung 12 staubdicht verschließbare Kabeldurchführungen 88 aufweist. Ein bevorzugtes Beispiel für eine derartige Kabeldurchführung wird nachfolgend anhand Fig. 4 näher erläutert.

Das zentrale Steuerelement 44 der Schutzvorrichtung 12 ist in Fig. 3 näher dargestellt. Zum Betrieb der Schutzvorrichtung 12 wird das Steuerelement 44 dieses Ausführungsbeispiels über Kabelverbindungen mit der Leistungseinheit 40 verbunden, wie dies in Fig. 1 angedeutet ist.

Auch das Steuerelement 44 ist in ein eigenes, staubdicht geschlossenes Gehäuse 92 eingebaut, das die erwähnten staubdichten Kabeldurchführungen 88 sowohl an den Eingängen 46 als auch an den Anschlüssen für die Leistungseinheit 40 aufweist.

Im Inneren besitzt das zentrale Steuerelement 44 einen sicheren Schaltkreis 94, der die Anforderungssignale 60 der angeschlossenen Bedienelemente 48 bis 52 aufnimmt und in Abhängigkeit davon über den Schaltkreis 78 den Leistungsschalter 42 ansteuert. Mit der Bezugsziffer 96 ist ein sicheres Schaltgerät bezeichnet, dem das Ausgangssignal der Überwachungseinheit 82 zugeführt ist. In Abhängigkeit von diesem Ausgangssignal, das eine Aussage über die Spannungsfreiheit am Ausgang des Leistungsschalters 42 ermöglicht, erzeugt das Schaltgerät 96 ein Quittungssignal 97, das die Kontrollanzeigen 64 der Bedienelemente 48 bis 52 ansteuert.

Mit den Bezugsziffern 98 und 100 sind zwei Gleichspannungsnetzteile bezeichnet, denen die Ausgangsspannung des AC/AC-Wandlers 84 zugeführt ist. Die Netzteile 98, 100 erzeugen eine 24 V-Betriebsspannung für den Schaltkreis 94 sowie das Schaltgerät 96. Da die Ansteuerung der Kontrollanzeige 64 der Bedienelemente 48 bis 52 im Hinblick auf eine Fehlfunktion sicherheitskritisch ist, werden hier für den Schaltkreis 94 und das Schaltgerät 96 bevorzugt getrennte Netzteile verwendet. Mit der Bezugsziffer 102 ist zudem ein Überprüfungskreis bezeichnet, der die gegenseitige Isolation der beiden Netzteile 98, 100 im Hinblick auf eine Erd- und/oder Querschlußerkennung überprüft. Das Ausgangssignal des Überprüfungskreises 102 wird ebenfalls bei der Ansteuerung des Leistungsschalters 42 ausgewertet.

Es versteht sich, daß das Quittungssignal 97 in dem Schaltkreis 94 ebenfalls gegenüber fehlerhaften Kurzschlüssen abgesichert sein muß, um eine fehlerhafte Aktivierung der Kontrollanzeigen 64 auszuschließen. Dies kann bevorzugt über galvanisch getrennte Signalwege geschehen, was hier jedoch aus Gründen der Übersichtlichkeit nicht näher dargestellt ist.

In Fig. 4 ist eine bevorzugte Kabeldurchführung 88 dargestellt, wie sie bei den staubdicht geschlossenen Gehäusen 86, 92 der Leistungseinheit 40 und des Steuerelements 44 verwendet wird.

Die Kabeldurchführung 88 besteht hier aus zwei voneinander trennbaren Teilen 110, 112, die über Schrauben oder Bolzen 114 lösbar miteinander verbunden werden können. Jeder der beiden Teile 110, 112 weist halbkreisförmige Ausnehmungen 116 auf, die sich im zusammengefügten Zustand der beiden Teile 110, 112 zu einem Vollkreis ergänzen. Die Ausnehmungen 116 dienen zur Aufnahme und Durchführung der Verbindungskabel zwischen den einzelnen Komponenten der Schutzvorrichtung 12.

Beispielhaft sind in der Darstellung in Fig. 4 drei Kabel 118, 120, 122 dargestellt, wobei das Kabel 122 einen geringeren Querschnitt aufweist als die Kabel 118, 120. Um trotz des geringeren Querschnitts einen staubdichten Abschluß in den Ausnehmungen 116 zu erreichen, sind Kunststoffringe 124 unterschiedlicher Dicke vorgesehen, die über eine Auftrennung 126 geöffnet werden können, so daß man sie um den äußeren Mantel der Kabel 118 bis 122 herumlegen kann.

Die beiden Teile 110, 112 der Kabeldurchführung 88 können fest mit einem hier nicht dargestellten Gehäuseunterteil sowie einem entsprechenden Gehäusedeckel der Gehäuse 86, 92 verbunden sein, so daß die Kabeldurchführungen 88 beim Öffnen der Gehäuse 86, 92 automatisch mit geöffnet werden. Alternativ hierzu können die Kabeldurchführungen 88 jedoch auch in anderer Weise an den Gehäusen 86, 92 befestigt sein.

In weiteren Ausführungsbeispielen sind die beiden Teile 110, 112 der Kabeldurchführungen 88 über ein Kippgelenk miteinander verbunden und daher in entsprechender Weise zu öffnen und zu schließen. In wiederum weiteren Ausführungsbeispielen können die Kabeldurchführungen mit Hilfe von einander gegenüberliegenden, flexiblen Moosgummis realisiert sein, zwischen denen die Kabelverbindungen aufgenommen werden. Wesentlich im Hinblick auf die vorliegende Erfindung ist, daß die Kabeldurchführungen 88 derart ausgebildet sind, daß die Kabel 118 bis 122 auch dann auf einfache Weise in die Gehäuse 86, 92 hineinführbar sind, wenn sie bereits mit Steckern vorkonfektioniert sind, deren Außendurchmesser größer ist als der Außendurchmesser der Kabel 118 bis 122 selbst.

Die Funktionsweise der erfindungsgemäßen Schutzvorrichtung ist nun wie folgt:

Im normalen Betrieb der Maschinenanlage 10 ist der Leistungsschalter 42 mit seinen Arbeitskontakten 70, 72 geschlossen, so daß die Steuereinheit 24 und die Antriebe 14, 16 mit Strom versorgt werden. Wenn nun ein Bediener der Maschinenanlage 10 für Einricht-, Wartungs- oder Instandsetzungsarbeiten in einen der Gefahrenbereiche der Maschinenanlage 10 eingreifen muß, wird er den Sicherheitsvorschriften entsprechend die Maschinenanlage 10 in einen Ruhezustand versetzen. Dies kann bspw. über eine Eingabe an der Steuereinheit 24 bzw. einer hier nicht dargestellten, weiteren Steuereinheit der Maschinenanlage 10 geschehen.

Um zu gewährleisten, daß die Maschinenanlage 10 während der durchzuführenden Arbeiten im Gefahrenbereich nicht unerwartet wieder anläuft oder in Betrieb genommen wird, betätigt der Bediener außerdem das ihm nächstliegende Bedienelement, wie dies in Fig. 1 beispielhaft für das Bedienelement 52 dargestellt ist. Das Bedienelement 52 erzeugt hierauf das stationäre Anforderungssignal 60, infolge dessen das Steuerelement 44 die Arbeitskontakte 70, 72 des Leistungsschalters 42 öffnet. Mit Hilfe der Überwachungseinheit 82 wird dann die Spannungsfreiheit am Ausgang des Leistungsschalters 42 überprüft. Sobald Spannungsfreiheit festgestellt wird, erzeugt die Überwachungseinheit 82 in Verbindung mit dem Schaltgerät 96 das Quittungssignal 97, das den Bedienelementen 64 zur Aktivierung der Kontrollanzeigen 64 zugeführt wird. Nun weiß der Bediener, daß sich die Maschinenanlage 10 in einem sicheren Zustand befindet, von dem keine Gefahr ausgeht.

Zur gezielten Wiederinbetriebnahme der Maschinenanlage 10 deaktiviert der Bediener nach Durchführung seiner vorgesehenen Arbeiten das Anforderungssignal 60 mit Hilfe desselben Bedienelements 52, das er auch zuvor betätigt hat. Sofern kein weiteres Anforderungssignal 60 eines weiteren Bedienelementes 48, 50 vorliegt, kann die Maschinenanlage 10 anschließend durch Eingabe eines Startkommandos, bevorzugt an der hierzu vorgesehenen Steuereinheit, in Betrieb genommen werden.

Aus der Beschreibung ergibt sich, daß die Bedienelemente 48 bis 52 in Ergänzung zu allen bereits früher vorgesehenen Abschaltmöglichkeiten vorhanden sind. Die Bedienelemente dienen nicht dazu, die Maschinenanlage selbst im normalen Betriebsablauf zu beeinflussen. Sie sind hier ferner auch nicht für eine Not-Aus-Funktion vorgesehen. Infolge dessen unterscheiden sich die Bedienelemente 48 bis 52 von bekannten Not-Aus-Tastern, und zwar vor allem dadurch, daß sie zwei stationäre Schaltstellungen besitzen, mit denen manuell zwei unterschiedliche Zustände des Anforderungssignals 60 erzeugt werden können. Aufgrund der seriellen Anordnung des Leistungsschalters 42 kann die Schutzvorrichtung 12 jedoch im Einzelfall trotzdem auch für eine Not-Aus-Funktion verwendet werden.

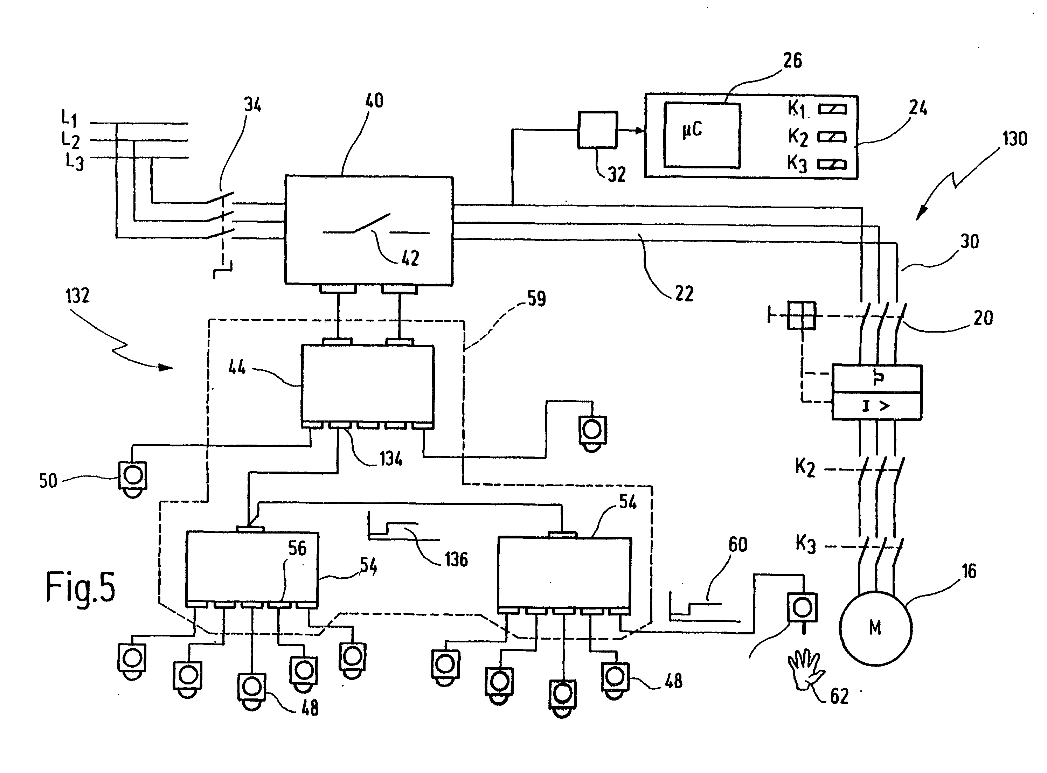

In Fig. 5 ist ein weiteres Ausführungsbeispiel der Erfindung anhand einer Maschinenanlage 130 dargestellt. Die erfindungsgemäße Schutzvorrichtung ist dabei insgesamt mit der Bezugsziffer 132 bezeichnet. Im übrigen bezeichnen gleiche Bezugszeichen dieselben Elemente wie in den vorhergehenden Figuren.

Der Übersichtlichkeit halber ist die Maschinenanlage 130 in Fig. 5 mit nur einem Antrieb 16 dargestellt. Es versteht sich jedoch, daß die Maschinenanlage 130 auch bei diesem Ausführungsbeispiel eine beliebige Anzahl von Antrieben 16 beinhalten kann.

Die Schutzvorrichtung 132 unterscheidet sich von der Schutzvorrichtung 12 vor allem dadurch, daß das Steuerelement 44 einen Feldbusanschluß 134 aufweist, über den mehrere Verteilereinheiten 54 gemeinsam an das Steuerelement 44 anschließbar sind. Dem Steuerelement 44 werden die kombinierten Anforderungssignale 136 aller angeschlossenen Verteilereinheiten 54 dabei über den Feldbusanschluß 134 zugeführt.

Der Feldbus ist bevorzugt ein sogenannter SafetyBus, der auf der Basis des sogenannten CAN-Busses von der Anmelderin der vorliegenden Erfindung entwickelt wurde. Grundsätzlich ist jedoch auch jedes andere, sichere Bussystem für die hier vorliegende Verwendung geeignet.

Im übrigen entspricht die Funktionsweise der Schutzvorrichtung 132 der Schutzvorrichtung 12.

In einem weiteren, hier nicht dargestellten Ausführungsbeispiel der Erfindung sind auch die einzelnen Bedienelemente 48 bis 52 über einen gemeinsamen Feldbus an das zentrale Steuerelement 44 anschließbar. Hierdurch wird der Verkabelungsaufwand bei der Installation der Schutzvorrichtung 132 nochmals reduziert, wobei jedoch in diesem Fall in den einzelnen Bedienelementen 48 bis 52 entsprechende Buscontroller vorhanden sein müssen.

## Patentansprüche

1. Schutzvorrichtung gegen unerwünschte Inbetriebnahme einer Maschinenanlage (10; 130),
- mit zumindest einem zentralen Leistungsschalter (42), der eingangsseitig seriell in einem Stromversorgungspfad (22) der Maschinenanlage (10; 130) angeordnet ist,
- mit einem zentralen Steuerteil (59), der ein im wesentlichen staubdicht geschlossenes Gehäuse (92) mit einer definierten Anzahl von Eingängen (46, 56; 46, 56, 134) zum Anschließen von dezentralen Bedienelementen (48, 50, 52) aufweist, wobei der zentrale Steuerteil (59) den zumindest einen zentralen Leistungsschalter (42) in Abhängigkeit von den angeschlossenen Bedienelementen (48, 50, 52) ansteuert, und
- mit zumindest einem dezentralen Bedienelement (48, 50, 52), das räumlich in einem Gefahrenbereich der Maschinenanlage (10; 130) angeordnet ist und das über eine Kabelverbindung (53) an einen der Eingänge (46, 56; 46, 56, 134) des zentralen Steuerteils (59) angeschlossen ist,
- wobei das dezentrale Bedienelement (48, 50, 52) in Abhängigkeit von einer Schutzanforderung (62) ein stationäres Schutzanforderungssignal (60) erzeugt, und
- wobei der Steuerteil (59) den Leistungsschalter (42) öffnet, wenn das stationäre Schutzanforderungssignal (60) von zumindest einem Bedienelement (48, 50, 52) vorliegt.

2. Vorrichtung nach Anspruch 1, **dadurch gekennzeichnet, daß** der Stromversorgungspfad (22) zumindest zwei eigenständige Verbraucher (14, 16, 24) der Maschinenanlage (10; 130) mit Strom versorgt.

3. Vorrichtung nach Anspruch 2, **dadurch gekennzeichnet, daß** einer der zumindest zwei eigenständigen Verbraucher (14, 16, 24) eine Steuereinheit (24) der Maschinenanlage (10; 130) ist.

4. Vorrichtung nach einem der Ansprüche 1 bis 3, **dadurch gekennzeichnet, daß** der Leistungsschalter (42) zusätzlich zu einem eingangsseitigen Hauptschalter (34) in dem Stromversorgungspfad (22) der Maschinenanlage (10; 130) angeordnet ist.

5. Vorrichtung nach einem der Ansprüche 1 bis 4, **dadurch gekennzeichnet, daß** sie eine Überwachungseinheit (82) aufweist, mit der der Stromversorgungspfad (22) am Ausgang des zumindest einen Leistungsschalters (42) fehlersicher auf Spannungsfreiheit überprüfbar ist.

6. Vorrichtung nach Anspruch 5, **dadurch gekennzeichnet, daß** das zumindest eine dezentrale Bedienelement (48, 50, 52) eine Kontrollanzeige (64) aufweist, die in Abhängigkeit von einem Quittungssignal (97) der sicheren Überwachungseinheit (82) aktivierbar ist.

7. Vorrichtung nach einem der Ansprüche 1 bis 6, **dadurch gekennzeichnet, daß** der zentrale Steuerteil (59) eine Verteilereinheit (54) beinhaltet, die eingangsseitig eine Vielzahl von Eingängen (56) zum Anschließen der dezentralen Bedienelemente (48, 50, 52) aufweist und die ausgangsseitig ein kombiniertes Schutzanforderungssignal (136) aller angeschlossenen Bedienelemente (48, 50, 52) erzeugt.

8. Vorrichtung nach einem der Ansprüche 1 bis 7, **dadurch gekennzeichnet, daß** die Eingänge (46, 56; 46, 56, 134) zum Anschließen der dezentralen Bedienelemente (48, 50, 52) mehrteilige Kabeldurchführungen (88) aufweisen, deren Teile (110, 112) die Kabelverbindung (53; 118, 120, 122) im wesentlichen staubdicht umgreifen.

9. Vorrichtung nach einem der Ansprüche 1 bis 8, **dadurch gekennzeichnet, daß** der Steuerteil (59) in einem eigenen staubdicht geschlossenen Gehäuse (92) angeordnet ist.

10. Vorrichtung nach einem der Ansprüche 1 bis 9, **dadurch gekennzeichnet, daß** der Leistungsschalter (42) in einem eigenen staubdicht geschlossenen Gehäuse (86) angeordnet ist, das mehrteilige, staubdichte Kabeldurchführungen (88) für Kabelverbindungen (118, 120, 122) aufweist.

11. Vorrichtung nach einem der Ansprüche 1 bis 10, **dadurch gekennzeichnet, daß** der zumindest eine Leistungsschalter (42) zumindest einen mechanisch zwangsgeführten Hilfskontakt (74, 76) aufweist, der in einen Rückführkreis (80) eingebunden ist.

12. Vorrichtung nach einem der Ansprüche 1 bis 11, **dadurch gekennzeichnet, daß** sie einen AC/AC-Wandler (84) aufweist, der eingangsseitig an den Stromversorgungspfad (22) der Maschinenanlage (10; 130) angeschlossen ist und der ausgangsseitig eine Betriebsspannung für die Vorrichtung (12; 132) bereitstellt.

13. Vorrichtung nach einem der Ansprüche 1 bis 12, **dadurch gekennzeichnet, daß** der Steuerteil (59) einen Feldbusanschluß (134) aufweist, über den die Schutzanforderungssignale (60; 136) zuführbar sind.

## Claims

1. A device for protecting a machine system (10; 130) against undesired operation, having
- at least one central power switch (42), which is arranged on the input side in series in a power supply path (22) of the machine system (10; 130),
- a central control part (59), which has a substantially dusttight enclosure (92), with a defined number of inputs (46, 56; 46, 56, 134) for connecting decentralized operating elements (48, 50, 52), the central control part (59) activating the at least one central power switch (42) in response to the connected operating elements (48, 50, 52), and
- at least one decentralized operating element (48, 50, 52), which is spatially arranged in a hazard area of the machine system (10; 130) and is connected via a cable connection (53) to one of the inputs (46, 56; 46, 56, 134) of the central control part (59),
- the decentralized operating element (48, 50, 52) generating a continuing protection-request signal (60) in response to a protection request (62), and
- the control part (59) opening the power switch (42) when the continuing protection-request signal (60) of at least one operating element (48, 50, 52) is present.

2. The device of claim 1, **characterized in that** the power supply path (22) supplies at least two independent loads (14, 16, 24) of the machine system (10; 130) with power.

3. The device of claim 2, **characterized in that** one of the at least two independent loads (14, 16, 24) is a control unit (24) of the machine system (10; 130).

4. The device of any of claims 1 to 3, **characterized in that** the power switch (42) is arranged in addition to an input-side main switch (34) in the power supply path (22) of the machine system (10; 130).

5. The device of any of claims 1 to 4, **characterized in that** it has a monitoring unit (82), with which the power supply path (22) can be reliably checked for the absence of voltage at the output of the at least one power switch (42).

6. The device as claimed in claim 5, **characterized in that** the at least one decentralized operating element (48, 50, 52) has a indicator display (64), which can be activated in response to an acknowledgment signal (97) of the safe monitoring unit (82).

7. The device of any of claims 1 to 6, **characterized in that** the central control part (59) comprises a distributor unit (54), which on the input side has a multiplicity of inputs (56) for connecting the decentralized operating elements (48, 50, 52) and on the output side generates a combined protection-request signal (136) of all the connected operating elements (48, 50, 52).

8. The device of any of claims 1 to 7, **characterized in that** the inputs (46, 56; 46, 56, 134) for connecting the decentralized operating elements (48, 50, 52) have multi-part cable bushings (88), the parts (110, 112) of which enclose the cable connection (53; 118, 120, 122) in a substantially dusttight manner.

9. The device of any of claims 1 to 8, **characterized in that** the control part (59) is arranged in its own dusttight enclosure (92).

10. The device of any of claims 1 to 9, **characterized in that** the power switch (42) is arranged in its own dusttight enclosure (86), which has multi-part, dusttight cable bushings (88) for cable connections (118, 120, 122).

11. The device of any of claims 1 to 10, **characterized in that** the at least one power switch (42) has at least one mechanically positively driven auxiliary contact (74, 76), which is incorporated in a feedback loop (80).

12. The device of any of claims 1 to 11, **characterized in that** it has an AC/AC converter (84), which on the input side is connected to the power supply path (22) of the machine system (10; 130) and on the output side provides an operating voltage for the device (12; 132).

13. The device of any of claims 1 to 12, **characterized in that** the control part (59) has a field bus connection (134), via which the protection-request signals (60; 136) can be supplied.

## Revendications

1. Dispositif de sécurité empêchant la mise en marche non voulue d'une machine (10 ; 130),
- avec au moins un commutateur central de puissance (42), qui est placé à l'entrée en série sur une ligne d'alimentation électrique (22) de la machine (10 ; 130),
- avec une partie de commande centrale (59) qui présente un boîtier (92) pour l'essentiel fermé de façon hermétique à la poussière, présentant un nombre défini d'entrées (46 , 56 ; 46, 56, 134) pour le raccordement d'éléments de commande décentralisés (48, 50, 52), la partie de commande centrale (59) commandant le commutateur central de puissance (42) au nombre d'au moins un en fonction des éléments de commande (48, 50, 52) qui lui sont raccordés, et
- avec au moins un élément de commande décentralisé (48, 50, 52) qui est placé spatialement dans une zone de sécurité de la machine (10 ; 130) et qui est raccordé par une liaison par câble (53) à l'une des entrées (46, 56 ; 46, 56, 134) de la partie de commande centrale (59),
- l'élément de commande central (48, 50, 52) produisant un signal de critère de sécurité (60) stationnaire en fonction d'un critère de sécurité (62), et
- la partie de commande (59) ouvrant le commutateur de puissance (42) quand le signal de critère de sécurité stationnaire (60) d'au moins un élément de commande (48, 50, 52) est présent.

2. Dispositif selon la revendication 1, **caractérisé en ce que** la ligne d'alimentation électrique (22) alimente en électricité au moins deux consommateurs autonomes (14, 16, 24) de la machine (10 ; 130).

3. Dispositif selon la revendication 2, **caractérisé en ce que** l'un des consommateurs autonomes (14, 16, 24) au nombre d'au moins deux est une unité de commande (24) de la machine (10 ; 130).

4. Dispositif selon l'une des revendications 1 à 3, **caractérisé en ce que** le commutateur de puissance (42) est placé en plus d'un commutateur principal d'entrée (34) sur la ligne d'alimentation électrique (22) de la machine (10 ; 130).

5. Dispositif selon l'une des revendications 1 à 4, **caractérisé en ce qu'**il présente une unité de surveillance (82) avec laquelle la ligne d'alimentation électrique (22) peut être contrôlée de manière sûre pour s'assurer de l'absence de tension à la sortie du commutateur de puissance (42) au nombre d'au moins un.

6. Dispositif selon la revendication 5, **caractérisé en ce que** l'élément de commande (48, 50, 52) décentralisé au nombre d'au moins un présente un affichage de contrôle (64) qui est activable en fonction d'un signal de quittance (97) de l'unité de surveillance sûre (82).

7. Dispositif selon l'une des revendications 1 à 6, **caractérisé en ce que** la partie de commande centrale (59) comprend une unité de répartition (54) qui présente en entrée une pluralité d'entrées (56) pour raccorder les éléments de commandes décentralisés (48, 50, 52) et produit en sortie un signal de critère de sécurité combiné (136) de tous les éléments de commande (48, 50, 52) raccordés.

8. Dispositif selon l'une des revendications 1 à 7, **caractérisé en ce que** les entrées (46, 56 ; 46, 56, 134) pour le raccordement des éléments de commande décentralisés (48, 50, 52) présentent des passages de câble (88) en plusieurs parties, dont des parties (110, 112) saisissent la liaison par câble (53 ; 118, 120, 122) d'une manière essentiellement hermétique à la poussière.

9. Dispositif selon l'une des revendications 1 à 8, **caractérisé en ce que** la partie de commande (59) est placée dans un boîtier (92) fermé de manière hermétique à la poussière.

10. Dispositif selon l'une des revendications 1 à 10, **caractérisé en ce que** le commutateur de puissance (42) est placé dans un boîtier séparé (86) fermé de façon hermétique à la poussière, qui présente des passages de câble (88) en plusieurs parties hermétiques à la poussière pour des liaisons par câble (118, 120, 122).

11. Dispositif selon l'une des revendications 1 à 10, **caractérisé en ce que** le commutateur de puissance (42) au nombre d'au moins un présente au moins un contact auxiliaire (74, 76) forcé mécaniquement, qui est intégré dans un circuit de réaction (80).

12. Dispositif selon l'une des revendications 1 à 11, **caractérisé en ce qu'**il présente un convertisseur alternatif/alternatif qui est raccordé en entrée à la ligne d'alimentation électrique (22) de la machine (10 ; 130) et qui délivre en sortie une tension de service pour le dispositif (12 ; 132).

13. Dispositif selon l'une des revendications 1 à 12, **caractérisé en ce que** la partie de commande (59) présente un branchement pour bus de terrain (134) par l'intermédiaire duquel les signaux de critère de sécurité (60 ; 136) peuvent être acheminés.
